Europäisches Patentamt

European Patent Office

Office européen des brevets

(19)

(11) Numéro de publication: **0 178 981**
**B1**

(12) **FASCICULE DE BREVET EUROPEEN**

(45) Date de publication du fascicule du brevet:
**17.11.88**

(51) Int. Cl.⁴: **H 05 B 7/06**

(21) Numéro de dépôt: **85401847.0**

(22) Date de dépôt: **23.09.85**

(54) **Structure d'electrode pour bain de métal en fusion.**

(30) Priorité: **01.10.84 FR 8415065**

(43) Date de publication de la demande:
**23.04.86 Bulletin 86/17**

(45) Mention de la délivrance du brevet:
**17.11.88 Bulletin 88/46**

(84) Etats contractants désignés:
**AT BE CH DE FR GB IT LI LU NL SE**

(56) Documents cités:
**EP - A - 0 056 225**
**CH - A - 452 730**
**FR - A - 477 123**
**FR - A - 1 229 497**
**US - A - 1 561 731**
**US - A - 1 645 091**
**US - A - 3 391 236**

(73) Titulaire: **UNION SIDERURGIQUE DU NORD ET DE L'EST DE LA FRANCE par abréviation "USINOR", La Défense 9, 4, place de la Pyramide, F-92800 Puteaux (FR)**

(72) Inventeur: **Cordier, Jean, La Rougeville 48 rue Henri Barbusse, F-59880 Saint Saulve (FR)**

(74) Mandataire: **Moncheny, Michel et al, c/o Cabinet Lavoix 2 Place d'Estienne d'Orves, F-75441 Paris Cedex 09 (FR)**

ACTORUM AG

## Description

La présente invention est relative à une structure d'électrode pour bain de métal en fusion dont la fonction est d'assurer le passage du courant électrique d'une masse conductrice en fusion contenue dans un récipient à un câble de liaison au réseau d'alimentation ou de retour à la masse ou au neutre. Elle vise en particulier une électrode de sole pour four ou poche à arc contenant un bain d'acier en fusion.

Les dispositifs de ce type et en particulier les électrodes de sole pour four à arc sont placées dans l'épaisseur du revêtement réfractaire recouvrant le blindage et assurent le passage du courant électrique entre le bain de métal en fusion contenu dans le four et une borne du câble d'alimentation électrique, extérieure au blindage. Compte tenu des températures atteintes dans le four et de la chaleur générée par effet joule dans lélectrode elle-même, il est nécessaire d'assurer un refroidissement énergique de l'électrode afin d'en éviter la fusion et les conséquences extrêmement préjudiciables qui en résulteraient, telle que percée et destruction de l'électrode.

Des solutions ont déjà été proposées pour refroidir l'électrode et consistent d'une façon générale à placer autour de l'âme centrale constituant l'élément conducteur de l'électricité, une chemise refroidie par une circulation de fluide de refroidissement, cette chemise étant d'une part, en contact intime avec l'âme centrale et, d'autre part, reliée électriquement à la borne d'alimentation électrique extérieure au four pour assurer également la fonction de conduction de l'électricité.

Or, l'électrode en cours de fonctionnement normal du four avec ses cycles de chargement, fusion, affinage, coulée, est soumise à de nombreux cycles thermiques qui induisent des dilatations alternées de l'âme et donc un contact instable avec la chemise, compte tenu des dilatations différentielles.

Par ailleurs, étant donné que le contact chemise-âme de l'électrode assure le passage du courant électrique, il se produit dans cette zone une élévation de température qui va à l'encontre de la fonction de refroidissement de la chemise.

La présente invention vise à remédier à ces inconvénients en fournissant une structure d'électrode convenablement refroidie et assurant une connexion électrique fiable et de très faible résistance, tout en tolérant le jeu des dilatations alternées.

La présente invention a ainsi pour objet une structure d'électrode pour bain de métal en fusion, noyée dans un revêtement réfractaire recouvrant la paroi du récipient contenant le bain métallique, affleurant à l'une de ses extrémités la surface interne du revêtement réfractaire et faisant saillie à son autre extrémité hors du récipient, du type comprenant une âme centrale conductrice de l'électricité traversant la paroi du récipient et une chemise de refroidissement disposée autour de l'âme centrale et en contact avec elle, caractérisée en ce que l'âme centrale est directement reliée par son extremité extérieure au récipient à une borne d'alimentation électrique, la zone de l'âme centrale adjacente à l'extrémité extérieure et en regard de la chemise de refroidissement, étant électriquement isolée de cette dernière.

Selon d'autres caractéristiques de la présente invention:

— la chemise de refroidissement est rendue solidaire de la paroi du récipient à l'aide d'une bride de fixation et fait saillie dans le revêtement réfractaire pour assurer le refroidissement de la zone de passage de l'électrode à travers la paroi du récipient.

— l'extrémité de l'âme centrale extérieure au récipient est solidaire d'une bride de suspension reliée par des bras télescopiques à ressorts à la bride de fixation de la chemise.

— la liaison électrique entre l'extrémité de l'âme centrale extérieure au récipient et le câble d'alimentation est assuré par un nipple refroidi intérieurement venu de matière avec la borne, vissé dans l'âme centrale et solidarisant la bride de suspension à l'âme centrale 3.

— l'âme centrale est insérée dans un manchon isolant électrique interposé entre cette dernière et la chemise de refroidissement dans une partie adjacente à l'extrémité extérieure de l'âme.

Un des avantages essentiels de la présente invention réside dans l'absence d'interaction entre les fonctions de conduction électrique et de refroidissement de l'électrode.

En effet, la dissipation de chaleur par effet joule au niveau de l'extrémité de l'âme centrale conductrice est limitée grâce à un excellent contact, reproductible et fiable, obtenu à l'aide du nipple. De plus, étant donné que ce nipple est solidaire de l'âme centrale il suit cette dernière lors des dilatations alternées et il n'y a donc aucun risque d'échauffement local et d'éclatement d'un arc.

Le nipple est lui-même refroidi par une circulation interne et en fond de filet d'un fluide de refroidissement entre le nipple et l'âme de l'électrode. Il concourt efficacement à la dissipation de la chaleur engendrée par effet joule. Ce dispositif élimine la superposition à la chaleur évacuée par les parois de la chemise de refroidissement située à un niveau supérieur, de celle engendrée par effet joule.

L'âme centrale de l'électrode se dilate et se contracte librement grâce à la suspension élastique, indépendante de la chemise de refroidissement fixe, dans laquelle l'âme peut glisser si les efforts de dilatation sont excessifs. La combinaison de deux ressorts opposés dans la suspension ramène l'âme centrale à sa position normale à pleine puissance.

La paroi intérieure de la chemise de refroidissement du type à double paroi peut par ailleurs se dilater librement en raison de sa structure détaillée ci-après.

Ces avantages conduisent à une résistance accrue aux cycles thermiques alternés, c'est à dire à une bonne longévité compatible avec celle de la sole du four.

Les pertes thermiques sont par ailleurs reduites, de même que les risques de percée en raison du refroidissement adapté.

L'invention est exposée ci-après plus en détail à l'aide du dessin annexé, qui en représente seulement un mode d'exécution. Sur ce dessin:

– la Fig. 1 est une vue en coupe axiale de l'électrode de sole selon la présente invention;

– la Fig. 2 est une vue à plus grande échelle d'un détail de cette électrode.

– la Fig. 3 est une vue en perspective éclatée d'une électrode de sole suivant l'invention et suivant une variante de réalisation.

La structure d'électrode représentée sur les figures est noyée dans un revêtement réfractaire 1 recouvrant la paroi ou le blindage 2 de la sole d'un four électrique à courant continu.

Cette électrode possède une âme centrale 3 de forme cylindrique affleurant à l'une 4 de ses extrémités la surface interne du revêtement réfractaire 1 en contact avec le bain d'acier en fusion 5.

L'âme centrale réalisée en un matériau conducteur de l'électricité, par exemple une billette d'acier, traverse la paroi 2 du four et fait saillie à son autre extrémité 6 hors du four afin d'assurer la conduction électrique du courant entre le bain métallique 5 et une borne d'alimentation 7 reliée au réseau électrique par un câble 8 qui peut être refroidi intérieurement.

Dans sa partie intérieure au revêtement réfractaire 1, l'âme centrale 3 est logée dans un chemisage réfractaire haute performance 9 qui est rendu solidaire du revêtement 1 par du béton ou pisé réfractaire 10.

L'âme centrale traverse le blindage 2 du four dans une chemise de refroidissement, ou lingotière 11, qui joue le rôle de porte électrode.

Cette chemise de refroidissement est rendue solidaire de la paroi 2 par une bride de fixation 12 en trois secteurs circulaires pour faciliter montage et démontage, qui est fixée à la paroi 2 par des boulons 13. La bride de fixation 12 est électriquement isolée de la paroi 2 par un joint diélectrique 14 pour éviter des courants éventuels de fuite à la terre.

La bride de fixation 12 prend appui sur la chemise de refroidissement 11 entre deux épaulements 15 et 16 ménagés sur la surface externe de l'enveloppe 17 de cette dernière.

A son autre extrémité 6, extérieure au four, l'âme centrale reçoit un nipple 18 venue de matière avec la borne 7 et qui est vissé dans un alésage à filetage conique 19 ayant le même axe vertical que l'âme centrale 3. Le fond de cet alésage comporte une cavité 20 dans laquelle sont logés un thermocouple 21 et un détecteur de niveau de liquide à ultra-son 22.

Le nipple 18 est en cuivre et refroidi intérieurement par une circulation de fluide de refroidissement, qui est en pratique de l'eau ou de l'huile, pénétrant par un orifice 23 via un conduit 24 jusqu'à la cavité 20 et circulant en retour par deux voies distinctes, pour être évacué par un orifice 25. Une de ces voies, principale, emprunte un canal annulaire 26 ménagé autour du conduit 24, l'autre voie, complémentaire étant constituée par la circulation du fluide de refroidissement en fond de filet 19 à partir de la cavité 20, vers le pied 27 du filet 19 où elle est reprise par des canaux 28 débouchant dans le canal 26.

Le conduit 24 est également utilisé pour le passage des conducteurs de liaison, désignés par la seule référence 29, du thermocouple 21 et du détecteur à ultra-son 22.

Le corps du nipple 18 est reçu dans une collerette 30 munie le long de sa face interne d'une rainure dans laquelle est logé un joint torique 31 assurant l'étanchéité au fluide de refroidissement circulant en fond de filet 19.

Cette collerette est venue de matière avec une bride de suspension 32 et comporte sur sa face inférieure un ensemble de pions 33 (par exemple 4 à 8 régulièrement répartis sur la circonférence) comportant des orifices de passage de vis non représentées qui sont vissées dans des alésages taraudés correspondants ménagés dans le corps du nipple 18 pour solidariser ce dernier et donc l'extrémité 6 de l'âme 3 à la bride de suspension 32.

La bride de suspension 32 est reliée par des bras télescopiques 34 à la bride de fixation 12. Les bras 34 sont au nombre de 3 répartis à 120° et articulés à la bride de suspension 32 qui est également en 3 secteurs circulaires. Ces bras télescopiques 34 assurent une suspension de l'âme centrale qui permet de compenser le jeu dû aux dilatations alternées de l'âme centrale 3 en fonction du cycle thermique de fonctionnement du four. Ces bras 34 sont constitués par un empilage élastique de rondelles «belleville» 35 reliées à une tige 36 par un disque 36a et formant ressorts de rappel, les rondelles étant logées dans un corps cylindrique 37.

Dans sa partie adjacente à l'extrémité 6, l'âme centrale 3 est insérée dans un manchon 38 électriquement isolant interposé entre l'âme 3 et la chemise de refroidissement 11. Ce manchon 38 se prolonge dans la chemise de refroidissement 11 sur une longueur comprise approximativement entre le tiers et la moitié de cette dernière. Le manchon 38 est par exemple en «Téflon» ou «Viton».

La chemise de refroidissement 11 ou lingotière, qui assure le refroidissement de l'âme centrale s'étend sur la quasi totalité de la partie de l'âme centrale extérieure au four et fait saillie à son extrémité supérieure dans le revêtement réfractaire 1 pour assurer le refroidissement de la zone de passage de l'électrode à travers le blindage.

Cette chemise 11 est à double paroi pour assurer la circulation d'un fluide de refroidissement dans deux espaces annulaires définis ci-après. La chemise 11 comporte une première paroi interne cylindrique 39 rapportée par soudage le long de son bord supérieur en forme de U à l'envers, à l'enveloppe extérieure 17. La face interne de la paroi 39 est en contact avec l'âme 3 dans sa partie supérieure et avec le manchon 38 dans sa partie inférieure, le bord inférieur 40 de cette paroi étant libre.

Une seconde paroi médiane 41 est disposée à l'intérieur du volume annulaire délimité par la première paroi 39 et l'enveloppe 17 et définit deux espaces annulaires 42 et 43 en communication l'un avec l'autre, respectivement entre la première paroi 39 et la seconde paroi 41 d'une part et d'autre part la seconde paroi 41 et l'enveloppe 17.

La seconde paroi 41 se présente sous forme d'un cylindre dont les bords supérieur et inférieur sont en forme de créneaux pour assurer la communication des espaces annulaires 42 et 43, nécessaire à l'établissement de la circulation du fluide de refroidissement.

La partie inférieure de l'enveloppe 17 de la chemise de refroidissement forme une collerette 44 dont le diamètre interne est légèrement supérieur au diamètre externe de la première paroi.

L'étanchéité au liquide de refroidissement est assurée par un joint torique 45 logé dans une rainure 46 ménagée sur la face interne de la collerette 44 en regard de la première paroi 39, et est complétée par un soufflet de compensation 47 solidaire à l'une de ses extrémités de la collerette 44 et à l'autre du bord inférieur 40 de la première paroi 39.

Le soufflet est protégé par un capuchon 48 coiffant la collerette et percé d'un orifice dont le diamètre est égal au diamètre extérieur du manchon 38.

L'enveloppe 17 de la chemise de refroidissement 11 comporte en outre une bague interne 49 annulaire, venue de matière, dont le diamètre interne est légèrement supérieur au diamètre externe de la seconde paroi 41, cette bague interne 49 délimitant la séparation entre l'arrivée 50 et le retour 51 du fluide de refroidissement de la chemise à double enveloppe et l'étanchéité étant assurée par un joint torique 52 logé dans une rainure ménagée sur la face interne de la bague interne 49 en regard de la seconde paroi 41.

Le fluide de refroidissement qui est en pratique de l'eau ou de l'huile pénètre donc dans la chemise 11 par la zone 50 située à un niveau inférieur, puis passe dans l'espace annulaire 42 par les créneaux ménagés le long du bord inférieur de la paroi 41 posée sur la face interne de la collerette, circule dans le sens ascentionnel le long de la face interne de la première paroi 39, passe à la partie supérieure de cette paroi 39 dans l'espace annulaire 43 par les créneaux ménagés le long du bord supérieur de la paroi 39 et est évacué de la chemise par la zone 51. La lame d'eau est mise en circulation dans la chemise 11 à une vitesse au moins égale a 3 m/sec.

La circulation du fluide de refroidissement ainsi créée, assure un refroidissement efficace de la totalité de l'âme centrale 3 et en particulier le long de sa partie supérieure en contact avec la chemise 11 qui fait saillie dans le revêtement réfractaire 1 du four. On évacue ainsi des flux de chaleur importants, ce qui permet de stabiliser le front de solidification entre les parties liquide et solide de l'âme 3 en acier de l'électrode à mi-hauteur de cette électrode.

Les courbes 53 en trait mixte illustrent l'évolution au cours des cycles thermiques alternés, de la zone de fusion de la billette en acier constituant l'âme centrale 3 de l'électrode. En raison du refroidissement énergique obtenu grâce à la chemise 11 pénétrant dans le four, la zone liquéfiée ne peut atteindre le manchon 38. Son niveau est mesuré par le capteur à ultrasons 22 placé dans la cavité 20 remplie de fluide de refroidissement.

On observe une séparation nette des fonctions de refroidissement, définie précédemment, et de conduction électrique à partir du nipple 18, dans le manchon 38 isolant où ne se superpose pas la chaleur engendrée par effet joule.

Les lignes de courant dans l'électrode sont rectilignes, sur toute la hauteur de cette électrode, depuis le bain 5 jusqu'au câble d'alimentation 8. Les champs électriques susceptibles de provoquer, par effet électromagnétique, une agitation du métal liquide de l'électrode sont ainsi maintenus à un niveau très faible. L'agitation du métal liquide a l'inconvénient, lorsqu'elle est importante, d'augmenter considérablement le flux de chaleur entre le métal liquide et la partie restée solide de l'âme de l'électrode et donc de faire reculer le front de solidification vers le fond refroidi del'électrode. L'électrode suivant l'invention conduit donc a un fonctionnement plus sûr et plus faible et a des pertes thermiques plus faibles.

De plus, la structure d'électorde décrite permet une mesure de température du fond de l'âme par le thermocouple 21 et également de la distance du fond de puits liquide 53 de l'âme au nipple refroidi, par le capteur ultrasonore 22.

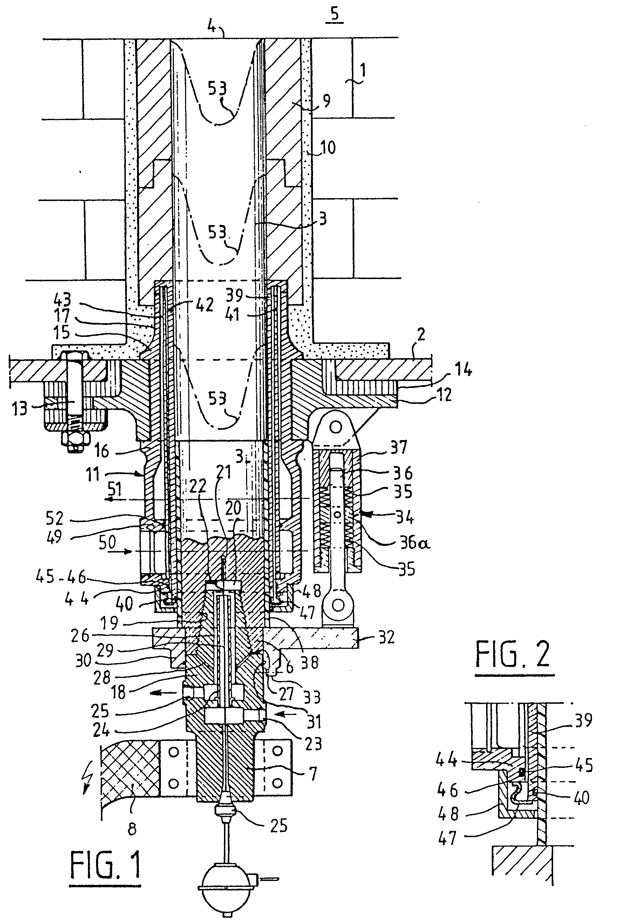

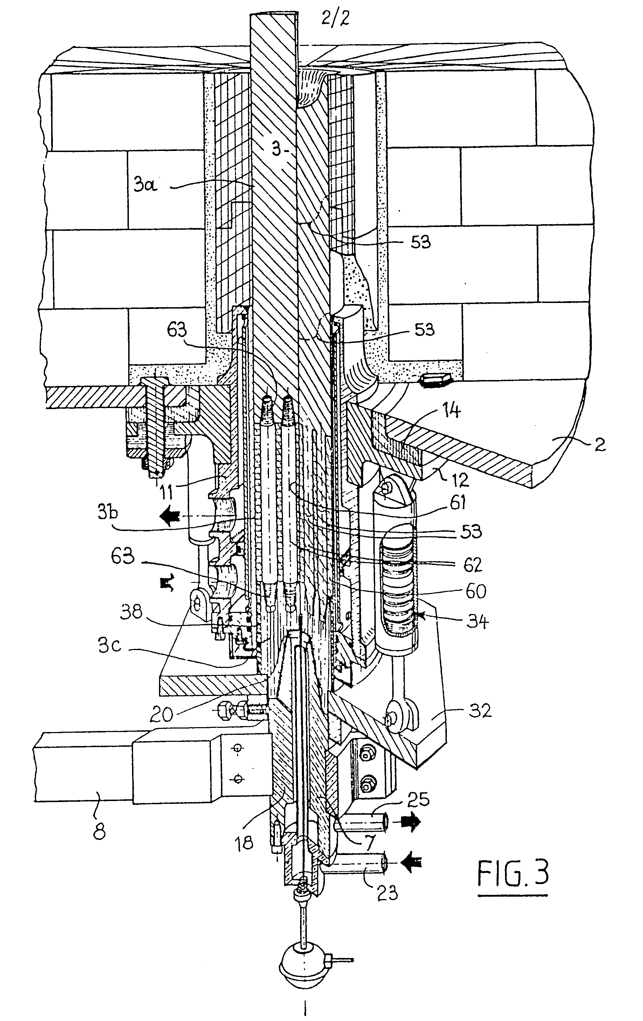

Sur la Fig. 3, on a représenté une variante de réalisation de l'électrode de sole suivant l'invention. Les éléments correspondants sur les figures 1 et 3 portent les mêmes repères. La partie gauche de l'âme centrale 3 représentée en coupe correspond à la structure de cette âme, lors de la mise en service de l'électrode de sole alors que la partie droite également en coupe correspond à la structure de l'âme 3 après la mise en service et après un certain temps de fonctionnement de l'électrode. L'âme centrale 3 selon la variante comporte, depuis son extrémité en contact avec le bain 5 jusqu'à son extrémité 6 reliée au nipple 18, une partie supérieure 3a en acier de structure massive, une partie intermédiaire 3b de structure composite et une partie inférieure 3c métallique et massive. La partie intermédiaire 3b est constituée par une pièce 60 en matériau réfractaire bloquée à l'intérieur de la chemise de refroidissement 11, approximativement sur la moitié de la hauteur de cette chemise et percée de canaux cylindriques 61 de direction axiale dans lesquels sont introduits des barreaux d'acier 62 d'un diamètre un peu inférieur au diamètre des canaux 61. Pendant le fonctionnement de l'électrode en service dans le four, la partie supérieure massive 3a de l'électrode est au moins partiellement fondue et, après un certain temps de fonctionnement, les barreaux 62 peuvent être partiellement ou totalement fondus suivant la position de la limite 53 de la zone de fusion. Au refroidissement, lors de l'arrêt de l'installation, le métal se solidifie à l'intérieur des canaux 61 de la pièce réfractaire 60, comme il est visible sur la partie droite de l'âme 3 représentée sur la Fig. 3. Au montage de l'électrode, les barreaux 62 sont fixés chacun sur la partie massive 3a de l'âme 3 à l'une de leurs extrémités et sur la partie massive 3c à leur autre extrémité, grâce à des parties filetées de forme conique 63. On assure ainsi un passage du courant dans la direction axiale entre la borne d'alimentation et le bain métallique 5.

Il est à noter que l'arrivée 23 et l'évacuation 25 du fluide de refroidissement du nipple 18 sont situées en-dessous de la zone de contact entre le nipple 18 et le conducteur 8; l'ensemble du nipple 18 est ainsi parcouru par le fluide de refroidissement qui permet en particulier de refroidir la zone de contact.

Les canaux 61 sont séparés les uns des autres et de la chemise 11 par des parois de matière réfractaire isolante si bien que le métal de chaque barreau 62 est isolé des barreaux voisins et/ou de la chemise 11, de manière efficace. Il en résulte qu'en fonctionnement, les retours du courant vers les parois intérieures de la chemise son considérablement réduits et que les courants de convection d'origine thermique ou électromagnétique dans la partie liquide de l'électrode sont pratiquement éliminés, en raison également de la forme allongée des barreaux. Il en résulte une réduction des transferts de chaleur vers les parois refroidies et le fond de l'électrode.

Les courants de convection au contact de l'acier solidifié sur les parois intérieures de la chemise de refroidissement 11 et dans le fond de la lingotière ont tendance à faire reculer le front de solidification et à provoquer le contact direct du liquide et des pièces refroidies en cuivre. L'élimination de ces courants de convection permet donc de limiter les échanges de chaleur et les risques de détérioration par une élévation de température trop importante de ces pièces. La pièce massive 3c peut être constituée partiellement ou totalement de plomb. Cette pièce massive 3c est entourée par le manchon isolant 38 en Viton dont la hauteur est limitée par rapport au mode de réalisation représenté sur la figure 1.

L'utilisation de plomb pour la réalisation de la pièce 3c permet d'améliorer le contact électrique entre les barreaux 62 et la pièce 3c d'une part et le nipple 18 relié au conducteur 8 d'autre part. Le plomb a en effet l'avantage d'être un bon conducteur électrique, surtout à l'état liquide. Dans le cas d'une surcharge anormale, une surintensité temporaire du courant traversant l'électrode entraîne une fusion de la partie en acier de l'âme 3 qui s'arrête à l'interface plomb/acier. Le fond de l'électrode et l'arrivée de courant sont ainsi protégés de tout risque de percée accidentelle. En fait, même lorsque la pièce massive 3c constituant le fond de l'électrode ne comporte pas de plomb au moment de la mise en place de l'électrode, du plomb contenu dans les ferrailles constituant le lit de fusion du four se retrouve dans cette partie de l'électrode, après un temps assez long de fonctionnement. En effet, le plomb dont la densité est supérieure à celle de l'acier liquide et qui est insoluble dans l'acier se dépose dans la partie la plus basse du liquide, c'est-à-dire au voisinage du fond de l'électrode où il s'accumule pendant le fonctionnement du four. Cette présence de plomb qui est bénéfique en ce qui concerne la conductibilité peut donc être accrue en coulant du plomb dans le fond de l'électrode ou en réalisant la pièce inférieure en plomb massif. L'effet bénéfique de la présence de plomb dans la partie liquide de l'électrode en service est également dû au fait que le carbone n'étant pas soluble dans le plomb liquide, aucun phénomène d'effervescence ne se manifeste donc dans la partie correspondante de l'électrode. Dans les électrodes en acier, au contraire, l'effervescence produit ou amplifie les courants de convection et son effet s'ajoute aux effets thermiques et électromagnétiques.

## Revendications

1. Structure d'électrode pour bain de métal en fusion, noyée dans un revêtement réfractaire (1) recouvrant la paroi (2) d'un récipient contenant le bain métallique (5), affleurant à l'une (4) de ses extrémités la surface interne du revêtement réfractaire et faisant saillie à son autre extrémité (6) hors du récipient, du type comprenant une âme centrale (3) conductrice de l'électricité traversant la paroi (2) du récipient et une chemise de refroidissement (11) disposée autour de l'âme centrale (3) et en contact étroit avec elle, caractérisée en ce que l'âme centrale (3) est reliée directement par son extrémité (6) extérieure au récipient à une borne (7) d'alimentation électrique, la zone de l'âme centrale (3) adjacente à l'extrémité (6) extérieure, et en regard de la chemise de refroidissement (11), étant électriquement isolée de cette dernière.

2. Structure d'électrode selon la revendication 1, caractérisée en ce que l'âme centrale (3) est insérée dans un manchon (38) isolant électrique interposé entre cette dernière (3) et la chemise de refroidissement (11), dans une partie adjacente a l'extrémité (6) extérieure de l'âme.

3. Structure d'électrode selon la revendication 2, caractérisée par le fait que l'âme centrale (3) comporte successivement, depuis son extrémité en contact avec le bain métallique (5) jusqu'à son extrémité reliée à la borne d'alimentation (7), une première partie métallique massive (3a), une partie composité (3b) constituée par une pièce (60) en matière réfractaire insérée dans la chemise de refroidissement (11) et percée d'une pluralité de canaux (61) de direction axiale par rapport à l'âme (3) à l'intérieur de chacun desquels est disposé un barreau métallique (62) et une seconde pièce métallique massive (3c) de raccord entre l'âme (3) et la borne d'alimentation (7) entourée par le manchon isolant (38), chacun des barreaux étant solidaire de la première partie métallique massive (3a) à l'une de ses extrémités et de la seconde partie métallique massive (3c) à son autre extrémité et séparé des autres barreaux et éventuellement de la chemise de refroidissement (11) par une paroi ménagée dans la pièce (60) en matériau réfractaire.

4. Structure d'électrode selon la revendication 3, caractérisée par le fait que la seconde partie métallique massive (3c) de l'âme (3) est constituée, au moins partiellement, de plomb.

5. Structure d'électrode selon l'une quelconque des revendications 1 à 4, caractérisée en ce que la chemise de refroidissement (11) est rendue solidaire de la paroi (2) du récipient à l'aide d'une bride de fixation (12) et fait saillie dans le revêtement réfractaire.

6. Structure d'électrode selon l'une quelconque des revendications 1 à 4, caractérisée en ce que l'extrémité (6) de l'âme centrale extérieure au récipient, est solidaire d'une bride de suspension (32) reliée par des bras télescopiques (34) à la bride de fixation (12) de la chemise.

7. Structure d'électrode selon l'une quelconque des revendications précédentes, caractérisée en ce que la liaison électrique entre l'extrémité (6) de l'âme centrale extérieure au récipient et la borne (7) d'alimentation est assurée par un nipple (18) refroidi intérieurement, venu de matière avec la borne, vissé dans l'âme centrale et solidarisant la bride de suspension (32) à l'âme centrale (3).

8. Structure d'électrode selon l'une quelconque des revendications 2 à 4, caractérisée en ce que la chemise de refroidissement (11) est à double paroi, une première paroi intérieure (39) solidaire par le haut de l'enveloppe extérieure (17) de la chemise et dont la face intérieure est en contact avec l'âme (3) et le manchon (38), et une seconde paroi médiane (41) disposée à l'intérieur du volume annannulaire délimité par la première paroi (39) et l'enveloppe (17) de la chemise, la première paroi (39) pouvant se dilater librement par son bord inférieur (40).

9. Structure d'électrode selon la revendication 8, caractérisée en ce que la partie inférieure de l'enveloppe de la chemise de refroidissement forme une collerette (44) dont le diamètre interne est légèrement supérieur au diamètre externe de la première paroi, l'étanchéité au liquide de refroidissement étant assurée par un joint torique (45) logé dans une rainure (46) ménagée sur la face interne de la collerette (44) en regard de la première paroi (39), l'étanchéité étant complétée par un soufflet de compensation (47) solidaire à l'une de ses extrémités de la collerette (44) et à l'autre du bord inférieur (40) de la première paroi (39).

10. Structure d'électrode selon la revendication 9, caractérisée en ce que le soufflet est protégé par un capuchon (48) coiffant la collerette (44) et percé d'un orifice dont le diamètre est égal au diamètre extérieur du manchon (38).

11. Structure d'électrode selon la revendication 8, caractérisée en ce que l'enveloppe (17) comporte une bague interne (49) annulaire venue de matière, dont le diamètre interne est légèrement supérieur au diamètre de la seconde paroi (41), cette bague interne (49) délimitant la séparation entre l'arrivée (50) et le retour (51) du fluide de refroidissement de la chemise à double enveloppe et l'étanchéité étant assurée par un joint torique (52) logé dans une rainure ménagée sur la face interne de la bague interne (49) en regard de la seconde paroi (41).

12. Structure d'électrode selon l'une quelconque des revendications précédentes, caractérisée en ce que la bride de fixation (12) est réalisée en trois secteurs circulaires et prend appui entre deux épaulements (15, 16) ménagés sur la surface externe de l'enveloppe (17) de la chemise de refroidissement.

13. Structure d'électrode selon l'une quelconque des revendications précédentes, caractérisée en ce qu'un joint isolant électrique (14) est interposé entre la bride de fixation (12) et la paroi du récipient (2).

**Patentansprüche**

1. Elektrodenaufbau für ein Bad aus geschmolzenem Metall, welcher in eine die Wand (2) eines das Metallbad (5) enthaltenden Behälters bedeckende feuerfeste Auskleidung (1) eingelassen ist, wobei er an dem einen (4) seiner Enden mit der feuerfesten Auskleidung abschliesst und an seinem anderen Ende (6) aus dem Behälter vorspringt, mit einem die Wand (2) des Behälters durchsetzenden elektrisch leitenden zentralen Kern (3) und einem um den zentralen Kern (3) gelegten und mit ihm in enger Berührung stehenden Kühlmantel (11), dadurch gekennzeichnet, dass der zentrale Kern (3) über sein ausserhalb des Behälters liegendes Ende (6) direkt mit einer elektrischen Anschlussklemme (7) verbunden ist, wobei der Bereich des zentralen Kerns (3), der an das äussere Ende (6) angrenzt und dem Kühlmantel (11) gegenüberliegt, von letzterem elektrisch isoliert ist.

2. Elektrodenaufbau nach Anspruch 1, dadurch gekennzeichnet, dass der zentrale Kern (3) in eine elektrisch isolierende Hülse (38) eingefügt ist, welche in einem an das äussere Ende (6) des Kerns angrenzenden Teil zwischen diesen (3) und den Kühlmantel (11) gelegt ist.

3. Elektrodenaufbau nach Anspruch 2, dadurch gekennzeichnet, dass der zentrale Kern (3) in der Reihenfolge von seinem mit dem Metallbad (5) in Berührung stehenden Ende bis zu seinem mit der Anschlussklemme (7) verbundenen Ende einen ersten massiven Metallteil (3a), einen zusammengesetzten Teil (3b), welcher aus einem Teil (60) aus feuerfestem Material aufgebaut ist, welcher in den Kühlmantel (11) eingefügt und von einer Anzahl von Kanälen (61) axialer Richtung in Bezug auf den Kern (3) durchsetzt ist, wobei im Inneren eines jeden derselben ein Metallstab (62) angeordnet ist, und ein von der isolierenden Hülse (38) umgebenes zweites massives Metallteil (3c) als Verbindung zwischen dem Kern (3) und der Anschlussklemme (7) aufweist, wobei jeder der Stäbe an dem einen seiner Enden mit dem ersten massiven Metallteil (3a) und mit seinem anderen Ende mit dem zweiten massiven Metallteil (3c) fest verbunden und von den anderen Stäben und gegebenenfalls vom Kühlmantel (11) durch eine in dem Teil (60) aus feuerfestem Material ausgesparte Wand getrennt ist.

4. Elektrodenaufbau nach Anspruch 3, dadurch gekennzeichnet, dass das zweite massive Metallteil (3c) des Kerns (3) zumindest teilweise aus Blei gebildet ist.

5. Elektrodenaufbau nach irgendeinem der Ansprüche 1 bis 4, dadurch gekennzeichnet, dass der Kühlmantel (11) mit der Wand (2) des Behälters mittels eines Befestigungsflansches (12) fest verbunden ist und in die feuerfeste Auskleidung hineinragt.

6. Elektrodenaufbau nach irgendeinem der Ansprüche 1 bis 4, dadurch gekennzeichnet, dass das ausserhalb des Behälters liegende Ende (6) des zentralen Kerns mit einem Aufhängungsflansch (32) fest verbunden ist, welcher über teleskopische Arme (34) mit dem Befestigungsflansch (12) des Mantels verbunden ist.

7. Elektrodenaufbau nach irgendeinem der vorstehenden Ansprüche, dadurch gekennzeichnet, dass die elektrische Verbindung zwischen dem ausserhalb des Behälters liegenden Ende (6) des zentralen Kerns und der Anschlussklemme (7) durch einen innen gekühlten, mit der Klemme einstückigen Nippel (18) gebildet ist, welcher in den zentralen Kern geschraubt ist und den Aufhängungsflansch (32) mit dem zentralen Kern (3) fest verbindet.

8. Elektrodenaufbau nach irgendeinem der Ansprüche 2 bis 4, dadurch gekennzeichnet, dass der Kühlmantel (11) doppelwandig ist, mit einer inneren ersten Wand (39), die über den oberen Bereich mit der äusseren Umhüllung (17) des Mantels fest verbunden ist und deren Innenseite mit dem Kern (3) und der Hülse (38) in Berührung steht, und einer mittleren zweiten Wand (41), die im Inneren des Ringraums angeordnet ist, der durch die erste Wand (39) und die Umhüllung (17) des Mantels begrenzt ist, wobei sich die erste Wand (39) mit ihrem unteren Rand (40) frei ausdehnen kann.

9. Elektrodenaufbau nach Anspruch 8, dadurch gekennzeichnet, dass der untere Teil der Umhüllung des Kühlmantels einen Kragen (44) bildet, dessen Innendurchmesser geringfügig grösser als der Aussendurchmesser der ersten Wand ist, wobei die Dichtigkeit für Kühlflüssigkeit durch einen Runddichtring (45) gewährleistet ist, welcher in einer in der Innenfläche des Kragens (44) gegenüber der ersten Wand (39) ausgebildeten Nut (46) aufgenommen ist, wobei die Dichtigkeit durch einen Ausgleichsbalg (47) vervollständigt wird, welcher an dem einen seiner Enden mit dem Kragen (44) und mit dem anderen mit dem unteren Rand (40) der ersten Wand (39) fest verbunden ist.

10. Elektrodenaufbau nach Anspruch 9, dadurch gekennzeichnet, dass der Balg durch eine Kappe (48) geschützt ist, welche den Kragen (44) überdeckt und von einer Öffnung durchsetzt wird, deren Durchmesser gleich dem Aussendurchmesser der Hülse (38) ist.

11. Elektrodenaufbau nach Anspruch 8, dadurch gekennzeichnet, dass die Umhüllung (17) einen einstückigen inneren Ringreif (49) aufweist, dessen Innendurchmesser geringfügig grösser als der Durchmesser der zweiten Wand (41) ist, wobei dieser innere Reif (49) die Trennung zwischen dem Zulauf (50) und dem Rücklauf (51) der Kühlflüssigkeit des doppelwandigen Mantels bestimmt, wobei die Dichtigkeit durch eine Rundringdichtung (52) gewährleistet ist, welche in einer Nut aufgenommen ist, die in der Innenseite des Innenreifs (49) der zweiten Wand (41) gegenüber ausgenommen ist.

12. Elektrodenaufbau nach irgendeinem der vorstehenden Ansprüche, dadurch gekennzeichnet, dass der Befestigungsflansch (12) aus drei kreisförmigen Sektoren ausgebildet ist und zwischen zwei Schultern (15, 16) anliegt, die an der Aussenoberfläche der Umhüllung (17) des Kühlmantels ausgebildet sind.

13. Elektrodenaufbau nach irgendeinem der vorstehenden Ansprüche, dadurch gekennzeichnet, dass eine elektrisch isolierende Dichtung (14) zwischen dem Befestigungsflansch (12) und der Wand des Behälters (2) angeordnet ist.

**Claims**

1. An electrode structure for a bath of molten metal, embedded in a refractory lining (1) covering the wall (2) of a vessel containing the bath of metal (5), flush at one, (4), of its ends with the internal surface of the refractory lining and projecting at its other end (6) out of the vessel, of the type comprising a central electrically conductive core (3) passing through the wall (2) of the vessel, and a cooling jacket (11) disposed around the central core (3) and in close contact therewith, characterised in that the central core (3) is directly connected by its end (6) outside the vessel to an electric power supply terminal (7), the zone of the central core (3) adjacent to the external end (6) and opposite the cooling jacket (11) being electrically insulated from the latter.

2. An electrode structure according to Claim 1, characterised in that the central core (3) is inserted in an electrically insulating sleeve (38) interposed between this latter (3) and the cooling jacket (11) in a portion adjacent to the external end (6) of the core.

3. An electrode structure according to Claim 2, characterised in that the central core (3) comprises, in succession from its end in contact with the bath of metal (5) as far as its end connected to the power supply terminal (7), a first solid metallic part (3a), a composite part (3b) constituted by a component (60) of a refractory material inserted in the cooling jacket (11) and pierced by a plurality of channels (61) extending axially in relation to the core (3), inside each one whereof there is disposed a metallic bar (62) and a second solid metallic connecting part (3c) between the core (3) and the power supply terminal (7) surrounded by the insulating sleeve (38), each of the bars being fixed to the first solid metallic part (3a) at one of its ends and to the second solid metallic part (3c) at its other end and separated from the other bars, and possibly from the cooling jacket (11) by a wall formed in the component (60) made of a refractory material.

4. An electrode structure according to Claim 3, characterised in that the second solid metallic part (3c) of the core (3) is constituted at least partly of lead.

5. An electrode structure according to any one of Claims 1 to 4, characterised in that the cooling jacket (11) is fixed to the wall (2) of the vessel by means of a fixing flange (12) and projects into the refractory lining.

6. An electrode structure according to any one of Claims 1 to 4, characterised in that the end (6) of the central core outside the vessel is fixed to a suspension flange (32) connected by telescopic arms (34) to the fixing flange (12) of the jacket.

7. An electrode structure according to any one of the preceding Claims, characterised in that the electrical connection between the end (6) of the central core outside the vessel and the power supply terminal (7) is ensured by an internally cooled nipple (18), obtained integrally with the terminal, screwed into the central core and interconnecting the suspension flange (32) to the central core (3).

8. An electrode structure according to any one of Claims 2 to 4, characterised in that the cooling jacket (11) has a double wall, a first inner wall (39) fixed at its upper end to the outer casing (17) of the jacket and whose internal face is in contact with the core (3) and the sleeve (38), and a second median wall (41) disposed inside the annular volume delimited by the first wall (39) and the casing (17) of the jacket, the first wall (39) being capable of free expansion at its lower edge (40).

9. An electrode structure according to Claim 8, characterised in that the lower portion of the casing of the cooling jacket forms a collar (44) whose internal diameter is slightly larger than the external diameter of the first wall, a seal for the cooling liquid being ensured by an O ring (45) accommodated in a groove (46) arranged on the internal face of the collar (44) opposite the first wall (39), the seal being completed by a compensating bellows (47) fixed at one of its ends to the collar (44) and at the other [end] to the lower edge (40) of the first wall (39).

10. An electrode structure according to Claim 9, characterised in that the bellows is protected by a cap (48) surmounting the collar (44) and pierced by an opening whose diameter is equal to the external diameter of the sleeve (38).

11. An electrode structure according to Claim 8, characterised in that the casing (17) comprises an internal integral ring (49) whose internal diameter is slightly larger than the diameter of the second wall (41), this internal ring (49) delimiting the separation between the inlet (50) and the return (51) of the cooling liquid of the double walled jacket and the seal being ensured by an O ring (52) accommodated in a groove arranged on the internal face of the internal ring (49) opposite the second wall (41).

12. An electrode structure according to any one of the preceding Claims, characterised in that the fixing flange (12) is made in three circular sectors and bears between two shoulders (15, 16) arranged on the external surface of the casing (17) of the cooling jacket.

13. An electrode structure according to any one of the preceding Claims, characterised in that an electrically insulating joint (14) is interposed between the fixing flange (12) and the wall of the vessel (2).

FIG. 1

FIG. 2

FIG.3